# EUROPÄISCHE PATENTSCHRIFT

(11) **EP 2 360 462 B1**
(45) Veröffentlichungstag und Bekanntmachung des Hinweises auf die Patenterteilung: **28.11.2018**
(21) Anmeldenummer: 11154546.3
(22) Anmeldetag: 15.02.2011
(51) Int. Cl.: G01M 1/24, G01M 1/32, H01F 13/00

(54) **Auswuchtmaschine mit Entmagnetisiervorrichtung**
Balancing machine with demagnetizing device
Machine à équilibrer avec dispositif de démagnétisation

(30) Priorität: 16.02.2010 DE 102010001999
(43) Veröffentlichungstag der Anmeldung: 24.08.2011
(73) Patentinhaber: Schenck RoTec GmbH, 64293 Darmstadt (DE)
(72) Erfinder: Gross, Gottfried, 64395, Brensbach (DE); Muth, Christian, 64405, Fischbachtal (DE)
(74) Vertreter: Haar, Lucas Heinz Jörn

(56) Entgegenhaltungen:
- GB-A- 2 089 593
- JP-A- H0 890 254
- US-B1- 7 441 456
- US-B2- 6 694 812

## Beschreibung

Die Erfindung betrifft eine Auswuchtmaschine mit wenigstens einem eine Drehachse aufweisenden Lagerständer zur drehbaren Lagerung eines auszuwuchtenden Werkstücks, insbesondere einer Gelenkwelle, und mit einer Schweißvorrichtung, welche den Unwuchtausgleich am Werkstück mit Hilfe eines elektrischen Schweißprozesses, insbesondere eines Widerstandsschweißprozesses, bewirkt.

Auswuchtmaschinen werden verwendet, um bei rotierenden Werkstücken, wie Rädern und Wellen, vorhandene Unwuchten zu erfassen und anschließend durch Entfernen oder Anbringen von Massen auszugleichen. Bei manchen Werkstücken, beispielsweise bei Wellen oder Gelenkwellen, ist es zweckmäßig oder sogar notwendig, den Unwuchtausgleich durch Anbringen von Ausgleichsmassen durchzuführen, wobei zum Befestigen der Ausgleichsmassen Schweißvorrichtungen verwendet werden, die unter Anwendung eines Widerstandsschweißprozesses die Ausgleichsmasse an das Werkstück anschweißen. Bestehen die Werkstücke aus einem magnetisierbaren Material, beispielsweise Stahl, so kann durch den Schweißvorgang eine Magnetisierung des Werkstücks eintreten, die für die vorgesehene Verwendung des Werkstücks nicht zulässig ist. Insbesondere durch den Einsatz von Schweißvorrichtungen, die Gleichstromschweißverfahren, z.B. das Mittelfrequenz-Schweißverfahren, anwenden, besteht das Problem, dass Werkstücke durch das Anschweißen von Ausgleichsmassen in der Auswuchtmaschine magnetisiert werden. Bei der Anwendung solcher Auswuchtmaschinen ist es daher erforderlich, Maßnahmen zu treffen, die das Magnetisieren verhindern oder nach dem Messen und Ausgleichen der Unwucht geeignete Prozesse anzuwenden, um die Werkstücke wieder zu entmagnetisieren.
Eine Auswuchtmaschine der eingangs angegebenen Art ist aus US 6,694,812 B2 bekannt. Die bekannte Auswuchtmaschine ist zum Auswuchten von Wellen, insbesondere von Gelenkwellen, bestimmt und weist eine in Achsrichtung der Welle positionierbare Schweißvorrichtung auf, mit der Blechelemente, die zum Ausgleichen der gemessenen Unwucht bestimmt sind, mittels Widerstandsschweißung an der Welle befestigt werden.

Verfahren und Vorrichtungen zur Entmagnetisierung von ferromagnetischen Werkstücken sind allgemein bekannt, vgl. DD 29 29 90 B5, DE 38 19 033 A1, DE 35 00 011 C2 und DE 10 2008 007 896 A1. Die Entmagnetisierung erfolgt in der Regel in der Weise, dass das Werkstück einem Magnetfeld ausgesetzt wird, dessen Polarität in kurzer zeitlicher Folge wechselt. Zur Erzeugung des Magnetfelds werden in der Regel an eine Stromquelle angeschlossene Spulen verwendet, die kernlos oder mit einem Eisenkern, beispielsweise einem Joch, versehen sein können.

Ferner zeigt JP H08 09254 A eine Schweißvorrichtung mit einer an der Schweißvorrichtung angeordneten Entmagnetisierungsvorrichtung. Nach einer erfolgten Schweißung von Werkstücken wird der Schweißstrom abgeschaltet und die Entmagnetisierungsvorrichtung mit einer Stromquelle verbunden. Die Werkstücke werden durch das von der Entmagnetisierungsvorrichtung aufgebaute Magnetfeld entmagnetisiert.

Der Erfindung liegt die Aufgabe zugrunde, eine Auswuchtmaschine der eingangs genannten Art zu schaffen, welche eine Magnetisierung der ausgewuchteten Werkstücke auf das erforderliche Maß reduziert. Die Auswuchtmaschine soll kostengünstig herstellbar und einfach zu handhaben sein.

Zur Lösung der genannten Aufgabe ist nach der Erfindung vorgesehen, dass die Auswuchtmaschine eine Entmagnetisiervorrichtung mit einer an eine Wechselstromquelle anschließbaren und ringförmig oder U-förmig ausgestaltete Spule aufweist, die zum Entmagnetisieren des ausgewuchteten

Werkstücks eingerichtet ist, wobei die Entmagnetisiervorrichtung im Bereich des wenigstens einen Lagerständers angeordnet ist und mittels einer Antriebsvorrichtung von dem Bereich des wenigstens einen Lagerständers in den Bereich der Auswuchtmaschine bewegbar ist, in dem ein Unwuchtausgleich am Werkstück erfolgt, wobei die Schweißvorrichtung und die Entmagnetisierungsvorrichtung dazu eingerichtet sind, dass ihre Bewegungen aufeinander abgestimmt werden können, dass es nicht zu einer gegenseitigen Behinderung kommt. Die Entmagnetisiervorrichtung ist vorzugsweise mittels einer Geradführung längs der Drehachse der Auswuchtmaschine bewegbar, wobei der Bewegungsbereich sich über die gesamte Länge des gehaltenen Werkstücks erstrecken kann, so dass auch lange Werkstücke, wie Wellen, Gelenkwellen oder dergleichen, auf ihrer gesamten Länge entmagnetisiert werden können. Zum Bewegen kann die Entmagnetisiervorrichtung mit einer Antriebsvorrichtung versehen sein, die entweder von Hand oder durch einen Antriebsmotor antreibbar ist. Vorteilhaft ist es, wenn die Antriebsvorrichtung eine Einrichtung zur Regelung der Bewegungsgeschwindigkeit der Entmagnetisiervorrichtung aufweist, damit die Entmagnetisierung an unterschiedliche Werkstücke angepasst werden kann.

Die Spule der Entmagnetisiervorrichtung kann die Drehachse des wenigstens einen Lagerständers umgreifend angeordnet sein. Alternativ kann die Spule auf einem Joch aus ferromagnetischem Material angeordnet sein, wobei das Joch die Drehachse des wenigstens einen Lagerständers umgreift. Besonders vorteilhaft ist eine Ausgestaltung der Auswuchtmaschine, bei der die Entmagnetisiervorrichtung mit einer zum Sichern des Werkstücks vorgesehenen Fangvorrichtung, die im Betrieb das Werkstück umgreift, zu einer baulichen Einheit verbunden ist. Eine solche Anordnung der Entmagnetisiervorrichtung lässt sich kostengünstig in eine Auswuchtmaschine integrieren und zeichnet sich durch geringen Platzbedarf aus. Die Entmagnetisierung kann bei der gleichen Einspannung des Werkstücks erfolgen wie das vorherige Auswuchten, so dass ein Umspannen des Werkstücks entfällt. Die Entmagnetisiervorrichtung kann bei einer solchen baulichen Einheit fest mit der Fangvorrichtung verbunden oder mittels einer an der Fangvorrichtung angeordneten Antriebsvorrichtung relativ zur Fangvorrichtung bewegbar sein.

Eine zum Auswuchten von Wellen, insbesondere Gelenkwellen, bestimmte Ausgestaltung einer Auswuchtmaschine nach der Erfindung weist ein Maschinenbett und zwei auf dem Maschinenbett gegenüberliegend angeordnete Lagerständer zur drehbaren Lagerung der Enden einer Welle auf, wobei jedem Lagerständer eine Entmagnetisiervorrichtung zugeordnet ist, die von dem Lagerständer in Richtung der Maschinenmitte bewegbar ist.

Die Erfindung wird nachfolgend anhand von Ausführungsbeispielen näher erläutert, die in der Zeichnung dargestellt sind. Es zeigen
- Figur 1: eine Auswuchtmaschine zum Auswuchten von Gelenkwellen,
- Figur 2: eine beispielhafte, nicht beanspruchte Auswuchtanlage mit Ladeeinrichtung und Entmagnetisiervorrichtung in einer ersten Betriebsstellung,
- Figur 3: eine zweite Betriebsstellung der Auswuchtanlage gemäß Figur 2,
- Figur 4: eine weitere Ausführung einer Auswuchtmaschine.

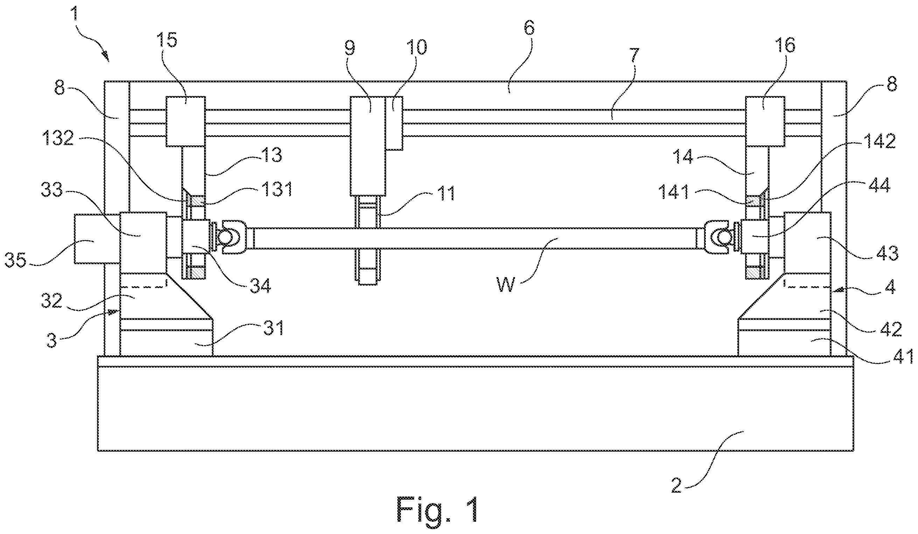

Figur 1 zeigt eine Auswuchtmaschine 1 zum Auswuchten von Gelenkwellen. Die Auswuchtmaschine hat ein Maschinenbett 2, auf dem einander gegenüber liegend zwei Lagerständer 3, 4 mit horizontaler Drehachse angeordnet sind. Die Lagerständer 3, 4 haben jeweils einen Sockel 31, 41, der in einer sich in Längsrichtung des Maschinenbetts 2 erstreckenden Geradführung gelagert ist und mit Hilfe eines Verfahrantriebs gegenüber dem Maschinenbett 2 verfahren werden kann, um eine Anpassung des Abstands der Lagerständer 3, 4 an die Länge der jeweils auszuwuchtenden Gelenkwelle zu ermöglichen. Von den Sockeln 3, 4 erstrecken sich nach oben jeweils paarweise angeordnete Blattfedern 32, 42. An den oberen Enden jedes Paares von Blattfedern 32, 42 ist ein Spindelgehäuse 33, 43 mit jeweils einer darin drehbar gelagerten Spindel befestigt. Die Spindeln der Spindelgehäuse 33, 43 haben an ihren einander zugekehrten Enden jeweils eine Spannvorrichtung 34, 44 zum zentriergenauen Einspannen eines Befestigungsendes, beispielsweise des Endflansches einer Gelenkwelle W. An dem Spindelgehäuse 33 ist ein Antriebsmotor 35 angeordnet, durch den die Spindel und die mit ihr verbundene Spannvorrichtung 34 drehend antreibbar sind. Die Spindel im Spindelgehäuse 43 ist frei drehbar und hat keinen Antrieb, sie kann aber auch mit einem Antrieb versehen sein. An den Spindelgehäusen 33, 43 sind weiterhin nicht dargestellte Schwingungsaufnehmer angeordnet, die bei einem Messlauf durch Unwucht generierte Schwingungen erfassen, die in Form elektrischer Signale an eine elektronische Recheneinrichtung übertragen werden, welche daraus Lage und Größe der auszugleichenden Unwucht berechnet.

Über oder hinter dem Maschinenbett 2 ist weiterhin ein Tragbalken 6 angeordnet, der sich parallel zum Maschinenbett 2 erstreckt und eine zur Drehachse der Spindeln parallele Tragschiene 7 aufweist. Die Enden des Tragbalkens 6 sind an Stützen 8 oder Haltern befestigt, die fest mit dem Maschinenbett 2 verbunden sind. An der Tragschiene 7 ist eine Schweißvorrichtung 9 verschiebbar gelagert. Mit Hilfe eines Antriebs 10 ist die Schweißvorrichtung 9 längs der Tragschiene 7 bewegbar und in einer beliebigen Position feststellbar. Die Schweißvorrichtung 9 hat eine Schweißzange 11, die in eine die Gelenkwelle W umgreifende Position gebracht werden kann und zum Anschweißen eines als Ausgleichsmasse dienenden Körpers, beispielsweise eines Blechs, an die Gelenkwelle W dient. Die Schweißvorrichtung arbeitet nach dem Widerstandsschweißsystem und weist eine Mittelfrequenz-Gleichstrom erzeugende Stromquelle auf, an welcher die Schweißzange während des Schweißvorgangs angeschlossen ist. Eine solche Stromquelle bietet eine Reihe von Vorteilen gegenüber den für das Widerstandsschweißen bekannten Wechselstromquellen. Das elektrische Feld des Mittelfrequenz-Gleichstroms hat aber den Effekt, dass ferromagnetische Werkstücke, wie hier die Gelenkwelle W, durch den Schweißvorgang magnetisiert werden und daher nach dem Unwuchtausgleich entmagnetisiert werden müssen.

Zum Entmagnetisieren weist die Auswuchtmaschine 1 zwei Entmagnetisiervorrichtungen 13, 14 auf, die jeweils an einem an der Tragschiene 7 längs beweglich gelagerten Schlitten 15, 16 befestigt sind. Alternativ können auch an den Lagerständern Vorrichtungen zum axialen bewegen der Entmagnetisiervorrichtungen 13, 14 angeordnet sein. Die Entmagnetisiervorrichtungen 13, 14 haben ringförmige Entmagnetisierspulen 131, 141, die zur Erzeugung magnetischer Wechselfelder an eine Wechselstromquelle anschließbar sind. An den Spulen 131, 141 können robuste, ebenfalls ringförmige Fangvorrichtungen 132, 142 angebracht sein. In der in der Zeichnung gezeigten Ruhestellung der Schlitten 15, 16 umgreifen die Spulen 131, 141 gemeinsam mit den Fangvorrichtungen 132, 142 imit Abstand die Spannvorrichtungen 34, 44. In dieser Ruhestellung kann die Gelenkwelle W in die Auswuchtmaschine 1 eingesetzt oder aus ihr entnommen werden.

Während eines Messlaufs zur Bestimmung der Unwucht der Gelenkwelle W werden die Fangvorrichtungen 132, 142 durch Verfahren der Schlitten 15, 16 in Richtung der Maschinenmitte in eine die Gelenkwelle W umgreifende Position gebracht, um die Gelenkwelle W im Falle einer Störung gegen Herausfliegen aus der Maschine zu sichern. Nach dem Messen und Berechnen der Unwucht wird die Gelenkwelle W angehalten und in eine zum Anschweißen der Ausgleichsmasse geeignete Drehwinkelposition gebracht. Gleichzeitig wird die Schweißvorrichtung 9 mit dem anzuschweißenden Massekörper versehen und an die zum Befestigen des Massekörpers vorgesehene Stelle der Gelenkwelle W gefahren, wo durch Betätigen der Schweißzange 11 und Anschalten der Stromquelle der Massekörper angeschweißt wird.

Nach dem Ausgleichen der Unwucht durch Anschweißen eines Massekörpers oder mehrerer Massekörper und gegebenenfalls einem weiteren Messlauf zur Kontrolle des Unwuchtausgleichs wird die Gelenkwelle W entmagnetisiert. Hierzu werden die Spulen der Entmagnetisiervorrichtungen 13, 14 durch geeignete Schaltvorrichtungen mit einer Wechselstromquelle verbunden und dann mit Hilfe eines die Schlitten 15, 16 bewegenden Antriebs mit definierter Geschwindigkeit derart längs der Gelenkwelle bewegt, dass die elektromagnetischen Wechselfelder der Entmagnetisierspulen 131, 141 große Bereiche der Gelenkwelle W und insbesondere die Bereiche mit angeschweißten Massekörpern bestreichen. Die Schweißvorrichtung 9 kann hierbei jeweils aus dem Arbeitsbereich der Entmagnetisiervorrichtungen 13, 14 herausgefahren werden und die Bewegungen der Schweißvorrichtung 9 und der Entmagnetisiervorrichtungen 13, 14 können so aufeinander abgestimmt werden, dass es nicht zu einer gegenseitigen Behinderung der Entmagnetisiervorrichtungen 13, 14 kommt.

An sich wäre eine einzige Entmagnetisiervorrichtung zur Durchführung der Entmagnetisierung ausreichend, wenn im wesentlichen jede zum Unwuchtausgleich bestimmte Stelle einer Welle damit erreicht werden könnte. Dies würde aber der Bauaufwand für eine in die Auswuchtmaschine integrierte Entmagnetisiervorrichtung und ihre Bewegungseinrichtung erheblich erhöhen, zumal Gelenkwellen nicht selten zwischen ihren Enden eine weitere Lagerstelle und ein zusätzliches Gelenk haben, welche mit einer die Gelenkwelle umgebenden Entmagnetisiervorrichtung nicht überfahren werden können. Für alle diese Anwendungsfälle ist es aus baulichen Gründen und aus Kostengründen vorteilhaft, an beiden Lagerständern 3, 4 für das Lagern der Enden der Gelenkwelle W jeweils eine Entmagnetisiervorrichtung 13, 14 anzuordnen, die von den Wellenenden aus in Richtung der Wellenmitte und gegebenenfalls bis zu einem zwischen den Wellenenden liegenden Zwischenlager bewegt werden können.

Anstelle von ringförmigen Entmagnetisierspulen können die Entmagnetisiervorrichtungen 13, 14 auch Entmagnetisierjoche haben, die aus einem U-förmigen Eisenkern und auf diesem angeordneten Spulen bestehen. Die Entmagnetisierjoche haben den Vorteil, dass sie radial über die Welle bewegt werden können, was vorteilhaft ist, wenn im Bereich der Spann- und Lagervorrichtungen an den Wellenenden nicht genügend Bauraum zur Verfügung steht. Anstelle einer die Welle umgreifenden Anordnung kann die Spule der Entmagnetisiervorrichtung auch neben der Welle angeordnet sein, wobei die Spulenachse im Wesentlichen radial zur Wellenachse ausgerichtet ist. Eine solche Anordnung kann aus baulichen Gründen vorteilhaft sein und behindert nicht das Be- und Entladen der Maschine. Der Energiebedarf zur Erzeugung des erforderlichen Magnetfelds ist hierbei aber größer.

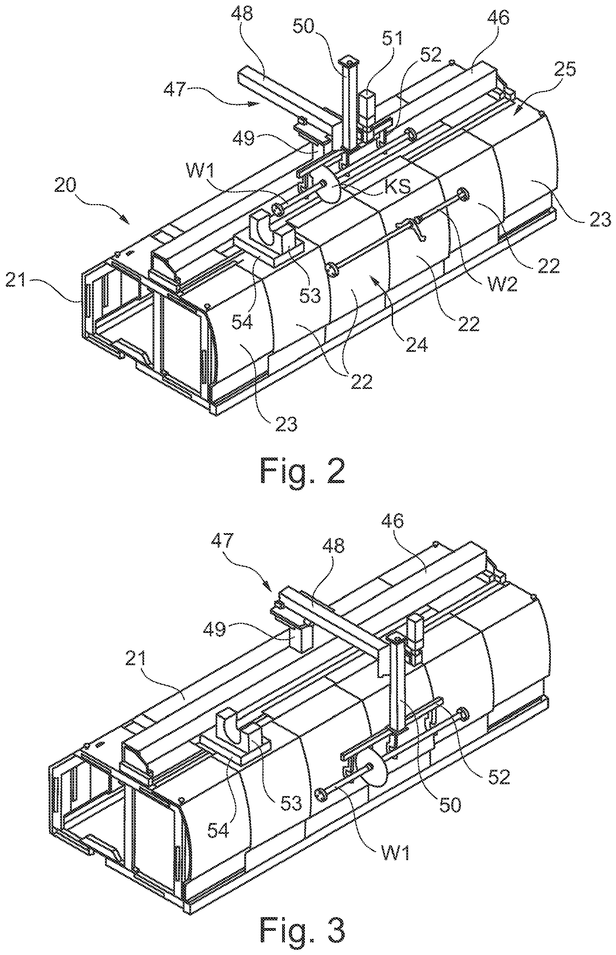

Figur 2 zeigt eine Auswuchtanlage 20 mit einer beispielhaften, nicht beanspruchten Auswuchtmaschine zum Auswuchten von Gelenkwellen GW, die von einem Schutzgehäuse 21 umgeben ist. Das Schutzgehäuse 21 weist auf der zum Beladen der Auswuchtmaschine bestimmten Seite eine Beladungsöffnung auf, die durch vier Schiebetüren 22 verschlossen ist. Die Schiebetüren 22 können von der Mitte des Schutzgehäuses 21 aus paarweise nach links und rechts in Richtung der Enden des Schutzgehäuses 21 auseinander gefahren und in eine Stellung gebracht werden, in der sie jeweils paarweise übereinander liegend Endabschnitte 23 des Schutzgehäuses 21 überdecken, die an die Beladungsöffnung angrenzen. Wenn die Schiebetüren 22 geschlossen sind, bilden sie auf der Beladungsseite einen wesentlichen Teil einer Seitenwand 24 und einen Teil einer daran angrenzenden Dachfläche 25, so dass nach dem Öffnen der Schiebetüren 22 die Auswuchtmaschine zum Be- und Entladen sowohl von der Seite als auch von oben gut zugänglich ist.

Über der Dachfläche 25 des Schutzgehäuses 21 und in einem Abstand von dieser ist ein Portalträger 46 angeordnet, der sich horizontal in Längsrichtung des Schutzgehäuses 21 und damit auch in Längsrichtung der Auswuchtmaschine erstreckt. An dem Portalträger 46 ist etwa in der Mitte eine Fördereinrichtung 47 angeordnet, die zum Entladen der Auswuchtmaschine bestimmt ist und gegebenenfalls auch zum Beladen der Auswuchtmaschine verwendet werden kann. Die Fördereinrichtung 47 weist einen Tragarm 48 auf, der an einer auf dem Portalträger 46 angeordneten Stütze 49 längsbeweglich gelagert ist und sich in horizontaler Richtung quer zum Portalträger 46 erstreckt. Mit Hilfe eines an der Stütze 49 angeordneten Antriebsmotors kann der Tragarm 48 in Längsrichtung bewegt und positioniert werden. An dem der Beladungsöffnung benachbarten Ende des Tragarms 48 ist längsbeweglich ein Hubarm 50 gelagert, der sich im Wesentlichen vertikal erstreckt und mit Hilfe eines Antriebsmotors 51 gehoben und gesenkt werden kann. Der Hubarm 50 trägt an seinem unteren Ende einen Hakengreifer 52 zum Ergreifen von in der Auswuchtmaschine angeordneten Gelenkwellen.

An dem Portalträger 46 ist außerdem eine Entmagnetisiervorrichtung 53 angeordnet, die ein U- oder C-förmiges, nach oben offenes Entmagnetisierjoch aufweist. Die Entmagnetisiervorrichtung 53 ist an einem Schlitten 54 befestigt, der an dem Portalträger 46 gelagert und mit Hilfe eines Antriebsmotors in Längsrichtung des Portalträgers 46 bewegbar ist. Die Entmagnetisiervorrichtung 53 ist dazu eingerichtet, eine von der Fördereinrichtung 47, wie in Figur 2 gezeigt, über dem Schutzgehäuse 21 gehaltene erste Gelenkwelle W1 zu entmagnetisieren, indem die Entmagnetisiervorrichtung 53 die Gelenkwelle W1 von unten mit Abstand umgreifend an der Gelenkwelle W1 entlang bewegt wird. Weist die Gelenkwelle W1 ein - in der Zeichnung durch eine Kreisscheibe KS symbolisiert - Zwischenlager auf, an dem die Entmagnetisiervorrichtung 53 nicht vorbei bewegt werden kann, so wird die Gelenkwelle W1 mit Hilfe der Fördereinrichtung 47 vorübergehend aus dem Bewegungsbereich der Entmagnetisiervorrichtung 53 herausbewegt und die Entmagnetisiervorrichtung 53 dann in den Bereich des hinter der Kreisscheibe KS liegenden Abschnitts der Gelenkwelle W1 gefahren, die dann in ihre Entmagnetisierstellung zurückbewegt werden kann.

Im Betrieb der Auswuchtanlage 20 ist der Ablauf der einzelnen Verfahrensschritte folgender:
Bei geschlossenen Schiebetüren 22 wird eine zuvor in die Auswuchtmaschine 20 eingelegte Gelenkwelle W1 vermessen und durch Anschweißen von Ausgleichsgewichten ausgewuchtet. Sobald der Auswuchtprozess beendet ist, fahren die Schiebetüren 22 auseinander, wodurch die Beladungsöffnung geöffnet wird. Die Fördereinrichtung 47 senkt bei ganz zurückgefahrenem Tragarm 48 den Hubarm 50 ab und unterfährt mit dem Hakengreifer 52 die Gelenkwelle W1. Durch Anheben des Hubarms 50 wird die Gelenkwelle W1 von dem Hakengreifer 52 aufgenommen und nach oben aus der Auswuchtmaschine 40 entladen. In der in Figur 2 gezeigten Parkposition des Hakengreifers wird nun die Gelenkwelle W1 zwischengelagert, während von einer Bedienungsperson eine zweite Gelenkwelle W2 in die Auswuchtmaschine 20 eingelegt wird. Ist dies geschehen, verlässt die Bedienungsperson die Sicherheitszone vor dem Schutzgehäuse 21 und startet den nächsten Auswuchtzyklus. Die Schiebetüren 42 schließen automatisch und der Messlauf beginnt. Während des Messlaufs der Auswuchtmaschine wird die Entmagnetisiervorrichtung 53 eingeschaltet und mit Hilfe ihres Antriebs längs der Gelenkwelle W1 verfahren, wodurch die Gelenkwelle W1 entmagnetisiert wird. Nach Beendigung des Messlaufs öffnen erneut die Schiebetüren 22 und die Bedienungsperson legt Ausgleichsmassen in der für den Ausgleich berechneten Größe in die in Bereitschaftsposition befindliche Schweißzange. Nach Verlassen der Sicherheitszone startet die Bedienungsperson den Ausgleichsvorgang, wozu die Schiebetüren 22 erneut geschlossen werden. Gleichzeitig transportiert die Fördereinrichtung 47 durch Vorfahren und Absenken die Gelenkwelle W1 in die in Figur 3 gezeigte Übergabeposition, in welcher der Hakengreifer sich in geeignetem Abstand vor den Schiebetüren 22 befindet. Die Bedienungsperson kann nun, soweit erforderlich, Zusatzarbeiten an der Gelenkwelle W1 durchführen und diese dann aus den Entnahmehaken entnehmen. Nach erneutem Verlassen der Sicherheitszone und bei geschlossenen Schutztüren und leeren Hakengreifern fährt die Fördereinrichtung den Hakengreifer automatisch in die in Figur 2 gezeigte Parkposition, von der aus der nächste Entladevorgang beginnen kann, wenn der laufende Auswuchtvorgang beendet ist.

Die durch die beschriebene Gestaltung der Auswuchtanlage ermöglichte Betriebsweise hat den Vorteil, dass die Entmagnetisierung der Gelenkwelle parallel zum Auswuchtprozess erfolgen kann und deshalb nicht zu einer Verlängerung der Taktzeit führt. Weiterhin kann die Gelenkwelle leichter über die volle Länge entmagnetisiert werden, so dass eine bessere Entmagnetisierung erreicht werden kann. Die Anordnung der Entmagnetisiervorrichtung im Bereich einer Parkposition der Fördereinrichtung zum Entladen der Auswuchtmaschine bietet die Möglichkeit, vorhandene Maschinen mit Entladeeinrichtungen auf einfache Weise aufzurüsten. Auch die mechanische und elektrische Gestaltung der Entmagnetisiervorrichtung ist einfacher als bei einer Integration in die Auswuchtmaschine.

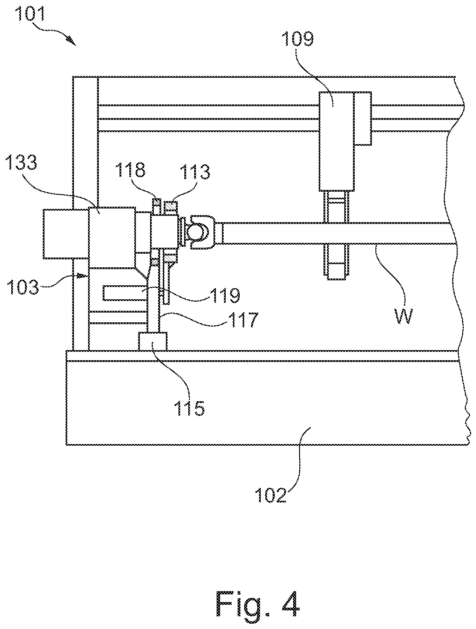

Figur 4 zeigt eine weitere Ausführungsform einer Auswuchtmaschine 101 mit einem Maschinenbett 102 und einem Lagerständer 103 zur drehbaren Lagerung eines Endes einer Gelenkwelle W. Neben dem Lagerständer 103 ist auf dem Maschinenbett 102 ein in Richtung der Längsachse der Auswuchtmaschine 101 von Hand oder maschinell verstellbarer Schlitten 115 mit einem Ständer 117 angeordnet, der eine Fangvorrichtung 118 trägt. Die Fangvorrichtung 118 umgreift in der gezeigten und für die Be- und Entladung der Maschine bestimmten Stellung ein an dem Lagerständer 103 angeordnetes Spindelgehäuse 133. Für das Auswuchten wird die Fangvorrichtung 118 mit Hilfe des Schlittens 115 so weit nach rechts verschoben, dass sie die Gelenkwelle W umgreift und gegen Herausfliegen aus der Maschine sichert. An dem Ständer 117 ist weiterhin eine Entmagnetisiervorrichtung 113 mit einer Spule 131 angeordnet, welche das Spindelgehäuse 133 neben der Fangvorrichtung 118 umgreift. Die Entmagnetisiervorrichtung 113 ist an einer parallel zur Drehachse des Lagerständers 103 bewegbaren Stange eines Linearantriebs 119 befestigt, der an dem Ständer 117 angebracht ist. Mit Hilfe des Linearantriebs 119 kann die Entmagnetisiervorrichtung 113 gegenüber der Fangvorrichtung 118 bewegt und um eine begrenzte Strecke in Richtung der Maschinenmitte verschoben werden.

Die in Figur 4 gezeigte Anordnung zeichnet sich durch einen geringen Bauaufwand aus. Während eines Messlaufs zur Bestimmung der Unwucht an der Gelenkwelle W werden die Fangvorrichtung 118 und die Entmagnetisiervorrichtung 113 gemeinsam durch Verschieben des Schlittens 115 in eine die Gelenkwelle W umgreifende Position gebracht. Nach dem Anschweißen eines Ausgleichsgewichts mit Hilfe einer Schweißvorrichtung 109 wird die Entmagnetisiervorrichtung 113 durch den Linearantrieb 119 über die Anschweißstelle bewegt und mit einer Entmagnetisierstromquelle verbunden. Auf diese Weise kann die Entmagnetisierung der Schweißstelle ohne ein Lösen und Verfahren der Fangvorrichtung durchgeführt werden.

## Patentansprüche

1. Auswuchtmaschine mit wenigstens einem eine Drehachse aufweisenden Lagerständer (3, 4) zur drehbaren Lagerung eines auszuwuchtenden Werkstücks und mit einer Schweißvorrichtung (9), welche den Unwuchtausgleich am Werkstück mit Hilfe eines Schweißprozesses bewirkt, **gekennzeichnet durch** eine Entmagnetisiervorrichtung (13, 14, 53), die zum Entmagnetisieren des ausgewuchteten Werkstücks eingerichtet ist und eine an eine Wechselstromquelle anschließbare und ringförmig oder U-förmig ausgestaltete Spule (131, 141) aufweist, wobei die Entmagnetisiervorrichtung (13, 14, 53) im Bereich des wenigstens einen Lagerständers (3, 4) angeordnet ist und mittels einer Antriebsvorrichtung von dem Bereich des wenigstens einen Lagerständers (3, 4) in den Bereich der Auswuchtmaschine bewegbar ist, in dem ein Unwuchtausgleich am Werkstück erfolgt, wobei die Schweißvorrichtung (9) und die Entmagnetisierungsvorrichtung (13, 14, 53) dazu eingerichtet sind, dass ihre Bewegungen aufeinander abgestimmt werden können, dass es nicht zu einer gegenseitigen Behinderung kommt.

2. Auswuchtmaschine nach Anspruch 1, **dadurch gekennzeichnet, dass** die Entmagnetisiervorrichtung (13, 14, 53) mittels einer Geradführung längs der Drehachse der Auswuchtmaschine (1) bewegbar ist.

3. Auswuchtmaschine nach einem der Ansprüche 1 oder 2, **dadurch gekennzeichnet, dass** die Antriebsvorrichtung einen elektrischen oder pneumatischen Motor aufweist, durch welchen die Entmagnetisiervorrichtung (13, 14, 53) bewegbar ist.

4. Auswuchtmaschine nach Anspruch 3, **dadurch gekennzeichnet, dass** die Antriebsvorrichtung eine Einrichtung zur Regelung der Bewegungsgeschwindigkeit der Entmagnetisiervorrichtung (13, 14, 53) aufweist.

5. Auswuchtmaschine nach einem der vorhergehenden Ansprüche, **dadurch gekennzeichnet, dass** die Spule (131, 141) der Entmagnetisiervorrichtung (13, 14) die Drehachse des wenigstens einen Lagerständers (3, 4) umgreift.

6. Auswuchtmaschine nach einem der Ansprüche 1 bis 4, **dadurch gekennzeichnet, dass** die Spule (131, 141) der Entmagnetisiervorrichtung (13, 14) neben der Drehachse des wenigstens einen Lagerständers (3, 4) angeordnet ist.

7. Auswuchtmaschine nach Anspruch 6, **dadurch gekennzeichnet, dass** die Spule (131, 141) auf einem Joch aus ferromagnetischem Material angeordnet ist, wobei das Joch die Drehachse des wenigstens einen Lagerständers (3, 4) umgreift.

8. Auswuchtmaschine nach einem der vorhergehenden Ansprüche, **dadurch gekennzeichnet, dass** sie eine Fangvorrichtung (132, 142, 118) aufweist, die im Betrieb das Werkstück umgreift und dass die Entmagnetisiervorrichtung (13, 14, 113) und die Fangvorrichtung (132, 142, 118) zu einer baulichen Einheit miteinander verbunden sind.

9. Auswuchtmaschine nach Anspruch 8, **dadurch gekennzeichnet, dass** die Entmagnetisiervorrichtung (113) mittels einer an der Fangvorrichtung (118) angeordneten Antriebsvorrichtung (119) relativ zur Fangvorrichtung bewegbar ist.

10. Auswuchtmaschine nach einem der vorhergehenden Ansprüche, **dadurch gekennzeichnet, dass** sie ein Maschinenbett (2) und zwei auf dem Maschinenbett (2) gegenüberliegend angeordnete Lagerständer (3, 4) zur drehbaren Lagerung der Enden einer Welle aufweist und dass jedem Lagerständer (3 bzw. 4) eine Entmagnetisiervorrichtung (13 bzw. 14) zugeordnet ist, die mittels einer Antriebsvorrichtung in Richtung der Maschinenmitte bewegbar ist.

## Claims

1. Balancing machine comprising at least one bearing stand (3, 4), which has an axis of rotation, for rotatably supporting a workpiece to be balanced, and comprising a welding device (9) which brings about the imbalance compensation on the workpiece by means of a welding process, **characterised by** a demagnetising device (13, 14, 53) that is designed to demagnetise the balanced workpiece and comprises an annular or U-shaped coil (131, 141) that can be connected to an alternating current source, the demagnetising device (13, 14, 53) being arranged in the region of the at least one bearing stand (3, 4) and being able to be moved by means of a drive device from the region of the at least one bearing stand (3, 4) into the region of the balancing machine in which imbalance compensation is carried out on the workpiece, the welding device (9) and the demagnetising device (13, 14, 53) being designed such that their movements can be coordinated with one another to prevent any mutual obstruction from occurring.

2. Balancing machine according to claim 1, **characterised in that** the demagnetising device (13, 14, 53) can be moved along the axis of rotation of the balancing machine (1) by means of linear guidance.

3. Balancing machine according to either claim 1 or claim 2, **characterised in that** the drive device comprises an electric or pneumatic motor by means of which the demagnetising device (13, 14, 53) can be moved.

4. Balancing machine according to claim 3, **characterised in that** the drive device comprises an apparatus for regulating the movement speed of the demagnetising device (13, 14, 53).

5. Balancing machine according to any of the preceding claims, **characterised in that** the coil (131, 141) of the demagnetising device (13, 14) surrounds the axis of rotation of the at least one bearing stand (3, 4).

6. Balancing machine according to any of claims 1 to 4, **characterised in that** the coil (131, 141) of the demagnetising device (13, 14) is arranged beside the axis of rotation of the at least one bearing stand (3, 4).

7. Balancing machine according to claim 6, **characterised in that** the coil (131, 141) is arranged on a crown made of ferromagnetic material, the crown surrounding the axis of rotation of the at least one bearing stand (3, 4).

8. Balancing machine according to any of the preceding claims, **characterised in that** it comprises a safety catch (132, 142, 118) that surrounds the workpiece in operation, and **in that** the demagnetising device (13, 14, 113) and the safety catch (132, 142, 118) are interconnected to form a structural unit.

9. Balancing machine according to claim 8, **characterised in that** the demagnetising device (113) can be moved relative to the safety catch (118) by means of a drive device (119) arranged on the safety catch.

10. Balancing machine according to any of the preceding claims, **characterised in that** it comprises a machine bed (2) and two bearing stands (3, 4) arranged opposite one another on the machine bed (2) for rotatably supporting the ends of a shaft, and **in that** a demagnetising device (13 or 14, respectively) that can be moved towards the centre of the machine by means of a drive device is assigned to each bearing stand (3 or 4, respectively).

## Revendications

1. Machine d'équilibrage avec au moins un support de palier (3, 4) présentant un axe de rotation pour loger en rotation une pièce d'oeuvre à équilibrer, et avec un dispositif de soudage (9) qui effectue la correction du balourd sur la pièce d'oeuvre à l'aide d'une procédure de soudage, **caractérisée par** un dispositif de démagnétisation (13, 14, 53) qui est conçu pour démagnétiser la pièce d'oeuvre équilibrée et qui présente une bobine (131, 141) qui peut être reliée à une source de courant alternatif et qui est configurée en forme d'anneau ou de U, le dispositif de démagnétisation (13, 14, 53) étant disposé dans la zone du au moins un support de palier (3, 4) et pouvant être déplacé au moyen d'un dispositif d'entraînement depuis la zone du au moins un support de palier (3, 4) dans la zone de la machine d'équilibrage dans laquelle une correction du balourd est effectuée sur la pièce d'oeuvre, le dispositif de soudage (9) et le dispositif de démagnétisation (13, 14, 53) étant conçus pour que leurs mouvements soient adaptés l'un à l'autre de telle sorte qu'ils ne se gênent pas mutuellement.

2. Machine d'équilibrage selon la revendication 1, **caractérisée en ce que** le dispositif de démagnétisation (13, 14, 53) peut être déplacé le long de l'axe de rotation de la machine d'équilibrage (1) au moyen d'un guide droit.

3. Machine d'équilibrage selon l'une des revendications 1 ou 2, **caractérisée en ce que** le dispositif d'entraînement comprend un moteur électrique ou pneumatique au moyen duquel le dispositif de démagnétisation (13, 14, 53) peut être déplacé.

4. Machine d'équilibrage selon la revendication 3, **caractérisée en ce que** le dispositif d'entraînement comprend un organe pour commander la vitesse de déplacement du dispositif de démagnétisation (13, 14, 53).

5. Machine d'équilibrage selon l'une des revendications précédentes, **caractérisée en ce que** la bobine (131, 141) du dispositif de démagnétisation (13, 14) entoure l'axe de rotation du au moins un support de palier (3, 4).

6. Machine d'équilibrage selon l'une des revendications 1 à 4, **caractérisée en ce que** la bobine (131, 141) du dispositif de démagnétisation (13, 14) est disposée à côté de l'axe de rotation du au moins un support de palier (3, 4).

7. Machine d'équilibrage selon la revendication 6, **caractérisée en ce que** la bobine (131, 141) est disposée sur une culasse réalisée dans un matériau ferromagnétique, ladite culasse entourant l'axe de rotation du au moins un support de palier (3, 4).

8. Machine d'équilibrage selon l'une des revendications précédentes, **caractérisée en ce qu**'elle comprend un dispositif de saisie (132. 142, 118) qui entoure la pièce d'oeuvre pendant le fonctionnement, et en ce que le dispositif de démagnétisation (13, 14, 113) et le dispositif de saisie (132, 142, 118) sont reliés ensemble pour former une unité structurelle.

9. Machine d'équilibrage selon la revendication 8, **caractérisée en ce que** le dispositif de démagnétisation (113) peut être déplacé par rapport dispositif de saisie au moyen d'un dispositif d'entraînement (119) disposé sur le dispositif de saisie (118).

10. Machine d'équilibrage selon l'une des revendications précédentes, **caractérisée en ce qu**'elle comprend un banc de machine (2) et deux supports de palier (3, 4) disposés en regard l'un de l'autre sur le banc de machine (2) pour loger en rotation les extrémités d'un arbre, et en ce qu'à chaque support de palier (3 ou 4) est associé un dispositif de démagnétisation (13 ou 14) qui peut être déplacé dans la direction du centre de la machine au moyen d'un dispositif d'entraînement.
